# EUROPÄISCHE PATENTSCHRIFT

(11) **EP 2 885 246 B1**
(45) Veröffentlichungstag und Bekanntmachung des Hinweises auf die Patenterteilung: **27.02.2019**
(21) Anmeldenummer: 13750332.2
(22) Anmeldetag: 16.08.2013
(51) Int. Cl.: C01B 21/06, C01B 21/082, C07D 487/16, C01B 32/914

(54) **VERFAHREN ZUR HERSTELLUNG VON ÜBERGANGSMETALLVERBINDUNGEN, ÜBERGANGSMETALLVERBINDUNGEN UND DEREN VERWENDUNG**
METHOD FOR PRODUCING TRANSITION METAL COMPOUNDS, TRANSITION METAL COMPOUNDS AND USE THEREOF
PROCÉDÉ DE PRODUCTION DE COMPOSÉS DE MÉTAUX DE TRANSITION, COMPOSÉS DE MÉTAUX DE TRANSITION ET LEUR UTILISATION

(30) Priorität: 17.08.2012 DE 102012016486
(43) Veröffentlichungstag der Anmeldung: 24.06.2015
(73) Patentinhaber: Vogt, Georg, 87435 Kempten (DE)
(72) Erfinder: BOCK, Henning, 87527 Sonthofen (DE); FEHR, Karl, Thomas, 81371 München (DE)
(74) Vertreter: Hofstetter, Schurack & Partner
(86) Internationale Anmeldenummer: PCT/EP2013/067168
(87) Internationale Veröffentlichungsnummer: WO 2014/027096

(56) Entgegenhaltungen:
- DE-A1- 19 634 777
- DE-A1-102008 045 742
- DE-A1-102009 034 090
- GB-A- 2 232 991
- Bettina Valeska Lotsch: "From Molecular Building Blocks to Condensed Carbon Nitride Networks: Structure and Reactivity", , 1 January 2006 (2006-01-01), XP055462120, München DOI: 10.1007/978-3-662-24795-2 ISBN: 978-3-662-24795-2 Retrieved from the Internet: URL:https://edoc.ub.uni-muenchen.de/6492/1 /Lotsch_Bettina_V.pdf [retrieved on 2018-03-22]

## Beschreibung

Die vorliegende Erfindung betrifft ein Verfahren zur Herstellung von Übergangsmetallverbindungen der allgemeinen Zusammensetzung MeₐC_{b}N_{c}H_{d} mit Me = Übergangsmetall oder Übergangsmetallgemisch, a = 1 - 4, b = 6 - 9,c = 8 - 14, d = 0 - 8, wobei ein Reaktionsgemisch bestehend aus Übergangsmetallen und/oder Übergangsmetallverbindungen und nicht oder gering kondensierten C-N-H-Verbindungen einer Wärmebehandlung ausgesetzt wird. Die Erfindung betrifft weiterhin entsprechend hergestellte Übergangsmetallverbindungen und deren Verwendung.

Die vorliegende Erfindung ist hinsichtlich der Einsatzstoffe sowie der Reaktionsbedingungen dem Stoffsystem Kohlenstoff, Stickstoff, Wasserstoff und Übergangsmetall zuzuordnen. In einer Vielzahl von Arbeiten wird über das Stoffsystem C, N, H berichtet. Untersuchungen im Stoffsystem C, N, H, Übergangsmetall konzentrieren sich auf die Herstellung von Nitriden und Carbiden einiger Übergangsmetalle sowie auf die Synthese von Einlagerungsverbindungen, in denen das Übergangsmetall sich in einer graphitischen, aus planaren s-Triazin-Einheiten aufgebauten Kohlenstoffnitrid-Struktur befindet. Viele der aus dem Stand der Technik bekannten Verfahren zur Erzeugung von Kohlenstoffnitriden beinhalten eine Pyrolyse von chemischen Substanzen und/oder Substanzgemischen. DING, Z. (u.a.) berichten in ChemSusChem, Vol.4, 2011,S. 274-281: "Synthesis of Transition Metal-Modified Carbon Nitride Polymers for Selective Hydrocarbon Oxidation" über die Herstellung von graphitischem Kohlenstoffnitrid, aufgebaut aus planaren s-Triazin-Einheiten, mit in das Gitter des graphitischen Kohlenstoffnitrids eingelagerten Übergangsmetallen (Cu, Ni, Mn, Fe, Co). Ding, Z. (u.a.) erhielten "Transition Metal-Modified Carbon Nitride Polymers" durch Wärmebehandlungen von Reaktionsmischungen der molaren Zusammensetzung 94,7% Dicyandiamid und 5,3% Metallchlorid bei 500-600°C und einer Dauer von 4 Stunden. Es wurden Reaktionsprodukte erhalten, bei denen das Metall in ein graphitisches Gitter polymerer Heptazinringe eingelagert wird. Das Röntgenpulverdiagramm dieser Stoffe zeigt Bragg-Reflexe mit d-Werten von: 3,230 +_ 0,020. Nachteilig an diesem bekannten Stand der Technik ist jedoch, dass die durch die Wärmebehandlung ausschließlich erhaltenen graphitischen Strukturen unerwünschte und wirtschaftlich nicht interessante physikalische Eigenschaften aufweisen.

Aus der GB 2 232 991 A ist eine Verbindung mit Schichtstruktur und ein Verfahren zur Herstellung dieser Verbindung bekannt, wobei die Verbindung eine durch die allgemeine Formel CₐNH_{b}M_{c} wiedergegebene Struktureinheit aufweist und M ein Übergangsmetall ist sowie 0,6 ≤ a ≤ 20,0, 0 ≤ b ≤ 1,0, 0,001 ≤ c ≤ 0,5. Die DE 10 2008 045742 A1 offenbart Eisen-Melonate mit der Stöchiometrie Fe₁C₉N₁₃H₀. Aus der DE 10 2009 034090 A1 ist die Herstellung von Carbiden durch thermische Zersetzung von Isocyanatkomplexen bekannt. Aus der Veröffentlichung von Bettina Valeska Lotsch: "From Molecular Building Blocks to Condensed Carbon Nitride Networks: Structure and Reacivity", Dissertation, LMU München, 2006, ISBN: 978-3-662-24795-2 ist die Herstellung von Metall-Melam-Komplexen durch Feststoff-Reaktionen zwischen Melamin und verschiedenen Metall-Chloriden bei Temperaturen von 593-703K bekannt.

Der vorliegenden Erfindung liegt daher die Aufgabe zugrunde, ein Verfahren zur Herstellung von Übergangsmetallverbindungen der eingangs genannten Art bereitzustellen, welches die kostengünstige Herstellung eines Ausgangsstoffes zur Herstellung wirtschaftlich interessanter Wertstoffe, insbesondere kubische Phasen aufweisende, Kohlenstoff und Stickstoff enthaltende Wertstoffe, ermöglicht. Es ist weiterhin Aufgabe der vorliegenden Erfindung eine entsprechend hergestellte Übergangsmetallverbindung bereitzustellen.

Diese Aufgabe wird durch ein gattungsgemäßes Verfahren mit den Merkmalen des Anspruchs 1, eine Übergangsmetallverbindung mit den Merkmalen des Anspruchs 12 und eine erfindungsgemäße Verwendung dieser Übergangsmetallverbindung mit den Merkmalen des Anspruchs 14 erfüllt. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Übergangsmetallverbindungen anzusehen sind. Umgekehrt sind auch vorteilhafte Ausgestaltungen der Übergangsmetallverbindungen als vorteilhafte Ausgestaltungen des Verfahrens anzusehen.

Überraschenderweise wurde bei der Umsetzung von nicht oder wenig kondensierten C-N-H-Verbindungen mit Übergangsmetallen und/oder Übergangsmetallverbindungen festgestellt, dass abhängig von der eingesetzten Metallmenge völlig verschiedene Reaktionsprodukte erhalten werden. Der Erfindung liegt die Erkenntnis zu Grunde, dass bei einer mehrstufigen Wärmebehandlung in einem zweiten Temperaturbereich zwischen 300°C und 570°C, von Reaktionsgemischen bestehend aus nicht oder nur gering kondensierten C-N-H-Verbindungen, nämlich Cyanamid, Dicyandiamid oder Melamin und einer zur Bildung von Clustern ausreichenden Menge Übergangsmetall und/oder Übergangsmetallverbindungen, wobei der Gehalt an Übergangsmetallen und/oder Übergangsmetallverbindungen mindestens 6 Molprozent, vorzugsweise 10 bis 40 Molprozent, bezogen auf das Reaktionsgemisch, beträgt, Verbindungen der allgemeinen Zusammensetzung MeₐC_{b}N_{c}H_{d} mit Me = Übergangsmetall oder Übergangsmetallgemisch, a = 1 - 4, b = 6 - 9, c = 8 - 14, d = 0 - 8 gebildet werden, in denen direkt oder indirekt an das Übergangsmetall gebundene C₆N₉H₄-Einheiten vorliegen. Unter einem Gehalt an Übergangsmetallen und/oder Übergangsmetallverbindungen sind insbesondere Anteile von 6 Mol-%, 7 Mol-%, 8 Mol-%, 9 Mol-%, 10 Mol-%, 11 Mol-%, 12 Mol-%, 13 Mol-%, 14 Mol-%, 15 Mol-%, 16 Mol-%, 17 Mol-%, 18 Mol-%, 19 Mol-%, 20 Mol-%, 21 Mol-%, 22 Mol-%, 23 Mol-%, 24 Mol-%, 25 Mol-%, 26 Mol-%, 27 Mol-%, 28 Mol-%, 29 Mol-%, 30 Mol-%, 31 Mol-%, 32 Mol-%, 33 Mol-%, 34 Mol-%, 35 Mol-%, 36 Mol-%, 37 Mol-%, 38 Mol-%, 39 Mol-% oder 40 Mol-% sowie entsprechende Zwischenwerte wie etwa 29,0 Mol-%, 29,1 Mol-%, 29,2 Mol-%, 29,3 Mol-%, 29,4 Mol-%, 29,5 Mol-%, 29,6 Mol-%, 29,7 Mol-%, 29,8 Mol-%, 29,9 Mol-% usw. zu verstehen. Unter einem zweiten Temperaturbereich zwischen 300°C und 570°C sind insbesondere Temperaturen von 300°C, 310°C, 320°C, 330°C, 340°C, 350°C, 360°C, 370°C, 380°C, 390°C, 400°C, 410°C, 420°C, 430°C, 440°C, 450°C, 460°C, 470°C, 480°C, 490°C, 500°C, 510°C, 520°C, 530°C, 540°C, 550°C, 560°C, 570°C sowie entsprechende Zwischenwerte wie etwa 305°C, 315°C, 325°, 335°C, 345°C oder 535°C und 545°C zu verstehen. Die mehrstufige Wärmebehandlung umfasst dabei erfindungsgemäß eine Vorbehandlung und eine oder mehrere Hauptbehandlungen, wobei die Vorbehandlung in einem ersten Temperaturbereich von 150°C und 400°C und eine erste Hauptbehandlung in dem zweiten Temperaturbereich zwischen 300°C und 570°C durchgeführt werden.

Nach dem erfindungsgemäßen Verfahren hergestellte Übergangsmetallverbindungen enthalten Di-imino-tri-s-triazin als Baustein. Nur bei dem genannten hohen Anteil an Übergangsmetall in der Reaktionsmischung wird die Ausbildung von Metallclustern ermöglicht, deren Angebot an delokalisierten Elektronen bei der Kondensation der nicht oder nur gering kondensierten C-N-H-Verbindungen, wie zum Beispiel Melamin oder Dicyandiamid oder Cyanamid, die Bildung und Stabilisierung von Verbindungen zur Folge hat, in denen Di-imino-tri-s-triazin-Tautomere gebunden an Übergangsmetalle vorliegen. Die Ausbildung von graphitischen Strukturen bei der Verwendung der erfindungsgemäßen Übergangsmetallverbindungen wird zuverlässig verhindert. Damit können die erfindungsgemäßen Übergangsmetallverbindungen zur Herstellung wirtschaftlich interessanter Wertstoffe, insbesondere kubische Phasen aufweisende, Kohlenstoff und Stickstoff enthaltende Wertstoffe, dienen. Die erfindungsgemäßen Übergangsmetallverbindungen weisen eine Metallcarbidstruktur auf, zum Beispiel bei Verwendung von Nickel ein dem Nickelcarbid vergleichbares Röntgendiffraktogramm auf. Diese werden nur bei der Umsetzung von Reaktionsmischungen mit hohen Übergangsmetall - Gehalten, d.h. mindestens 6 Molprozent, vorzugsweise 10 bis 40 Molprozent, bezogen auf das Reaktionsgemisch erhalten. Die Bragg-Reflexe der Röntgenpulverdiagramme der erfindungsgemäßen Übergangsmetallverbindungen belegen das Vorliegen von Stoffen, die in einem dem Metallcarbid, beispielsweise dem Nickelcarbid analogen Kristallgitter vorliegen. Aus dem thermischen Verhalten dieser Stoffe ist zu schließen, dass - bei Verwendung von Nickel als Übergangsmetall - kein Nickelcarbid Ni₃C vorliegt. Das Molverhältnis Übergangsmetall und/oder Übergangsmetallverbindung zu den gering kondensierten C-N-H-Verbindungen beträgt vorteilhafterweise jeweils zwischen 1:2 und 1:8.

In vorteilhaften Ausgestaltungen des erfindungsgemäßen Verfahrens kann die Wärmebehandlung gemäß der ersten Hauptbehandlung ein- oder mehrstufig oder pendelnd innerhalb des zweiten Temperaturbereichs durchgeführt werden. Des Weiteren besteht die Möglichkeit, dass die Wärmebehandlung gemäß der ersten Hauptbehandlung innerhalb des zweiten Temperaturbereichs über einen Zeitraum zwischen 5 Minuten und 500 Stunden kontinuierlich oder in Zeitintervallen durchgeführt wird. Unter einem Zeitraum zwischen 5 Minuten und 500 Stunden sind insbesondere Zeiträume von 5min, 10min, 15min, 20min, 25min, 30min, 35min, 40min, 45min, 50min, 55min, 60min, 2h, 3h, 4h, 5h, 6h, 7h, 8h, 9h, 10h, 11h, 12h, 13h, 14h, 15h, 16h, 17h, 18h, 19h, 20h, 21h, 22h, 23h, 24h, 25h, 26h, 27h, 28h, 29h, 30h, 31h, 32h, 33h, 34h, 35h, 36h, 37h, 38h, 39h, 40h, 41h, 42h, 43h, 44h, 45h, 46h, 47h, 48h, 50h, 100h, 150h, 200h, 250h, 300h, 350h, 400h, 450h, 500h sowie entsprechende Zwischenwerte wie etwa 8min, 12min, 22min, 1,5h, 2,5h, 3,5h, 4,5h, 5,5h, 6,5h, 7,5h, 8,5h, 9,5h oder 48,5h, 50,5h 75,5h, 85,5h, 100,5h oder 255h zu verstehen.

In weiteren vorteilhaften Ausgestaltungen des erfindungsgemäßen Verfahrens sind die Übergangsmetalle und/oder Übergangsmetallverbindungen aus der Gruppe der als Katalysatoren wirksamen Übergangsmetalle oder aus der Gruppe der Carbonyl-Komplexe bildenden Elemente ausgewählt. Erfindungsgemäße Übergangsmetallverbindungen werden insbesondere auch dann erhalten, wenn Carbonylkomplexe bildende und/oder als Hydrierkatalysatoren geeignete Übergangsmetalle wie Mangan, Eisen, Cobalt, Nickel, Platin, einzeln oder im Gemisch in der Reaktionsmischung verwendet werden. Als Übergangsmetalle können beispielsweise Nickel und/oder Kobalt und/oder Mangan und/oder Eisen und/oder Platin und/oder Niob und/oder Eisen und/oder Wolfram und/oder Tantal und/oder Kupfer und/oder Zink eingesetzt werden. Vorzugsweise werden die Übergangsmetalle in elementarer Form als Pulver eingesetzt.

In weiteren vorteilhaften Ausgestaltungen des erfindungsgemäßen Verfahrens werden der aus nicht oder gering kondensierten C-N-H- Verbindungen und Übergangsmetallen und/oder Übergangsmetallverbindungen bestehenden erfindungsgemäßen Reaktionsmischung Cyanide und/oder Cyanokomplexe und/oder Isocyankomplexe zugesetzt, insbesondere solche, die eine kubische Gitterstruktur aufweisen.

In einer weiteren vorteilhaften Ausgestaltung des erfindungsgemäßen Verfahrens werden der aus nicht oder gering kondensierten C-N-H-Verbindungen und Übergangsmetallen und/oder Übergangsmetallverbindungen bestehenden erfindungsgemäßen Reaktionsmischung vor und/oder nach einer oder mehreren Wärmebehandlungen in dem ersten Temperaturbereich Bor-Pulver und/oder Bor-Verbindungen wie zum Beispiel Lithiumborid LiB₁₂ und/oder nitridbildende Elemente und/oder deren Verbindungen zugesetzt.

In vorteilhaften Ausgestaltungen des erfindungsgemäßen Verfahrens erfolgt nach der Wärmebehandlung gemäß der ersten Hauptbehandlung in dem zweiten Temperaturbereich zwischen 300°C und 570°C mindestens eine weitere Wärmebehandlung in einem dritten Temperaturbereich zwischen 520°C und 700°C. Unter einem dritten Temperaturbereich zwischen 520°C und 700°C sind insbesondere Temperaturen von 520°C, 530°C, 540°C, 550°C, 560°C, 570°C, 580°C, 590°C, 600°C, 610°C, 620°C, 630°C, 640°C, 650°C, 660°C, 670°C, 680°C, 690°C, 700°C sowie entsprechende Zwischenwerte wie etwa 545°C, 555°C, 565°, 575°C, 585°C oder 635°C und 645°C zu verstehen. Bei dieser Thermolyse der erfindungsgemäßen Übergangsmetallverbindungen werden die Iminogruppen als Teil von Isocyan-Bausteinen für die Bildung stabiler Übergangsmetall-Komplexe verfügbar. Die Eigenschaft der erfindungsgemäßen Übergangsmetallverbindungen, bei der Thermolyse Stoffe mit kubischer Gitterstruktur zu bilden, ist auf die Anwesenheit von Isocyanstrukturen im Di-imino-tri-s-triazin-Molekül zurückzuführen. Während zum Beispiel Melem bei Temperaturen oberhalb 560°C in ein Graphit ähnliches C-N-Material umgewandelt wird, besitzen die erfindungsgemäßen Di-imino-tri-s-triazin-Übergangsmetallverbindungen die hervorragende Eigenschaft, sich bei der Thermolyse in Kohlenstoff und Stickstoff enthaltendes Material mit kubischer Gitterstruktur umzuwandeln. Aus dem Stand der Technik ist nicht bekannt, dass durch Wärmebehandlung von Reaktionsgemischen bestehend aus beispielsweise Cyanamid und/oder Dicyandiamid und/oder Melamin und einem und/oder mehreren Übergangsmetallen Reaktionsprodukte erhalten werden, in denen eine C-N-H-Übergangsmetallverbindung vorliegt, welche bei einer weiteren Wärmebehandlung einen kubische Phasen aufweisenden, Kohlenstoff, Stickstoff und Wasserstoff enthaltenden Stoff bildet. Aus dem Stand der Technik ist ferner nicht bekannt, dass solche kubische Phasen aufweisende Stoffe verwendet werden zur Herstellung von im kubischen Gitter vorliegenden Carbiden und/oder Nitriden. Die Verwendung der erfindungsgemäßen Verbindungen als Ausgangsstoff zur Herstellung von in kubischer Gitterstruktur vorliegenden Kohlenstoff und/oder Stickstoff enthaltenden Materialien ist daher ebenso Gegenstand der Erfindung. Bei der Wärmebehandlung einer erfindungsgemäßen Verbindung bei Temperaturen größer 520°C wird als Thermolyseprodukt in kubischer Gitterstruktur vorliegender Kohlenstoff erhalten. Zeigen die Röntgendiffraktogramme von Thermolyseprodukten die Bragg-Reflexe von kubischem Kohlenstoff, so liegt der Nachweis vor, dass eine erfindungsgemäße Verbindung der Thermolyse unterzogen wurde. Die Herstellung von im kubischen Kristallgitter vorliegenden, Kohlenstoff und/oder Stickstoff enthaltenden, Stoffen unter milden Reaktionsbedingungen stellt nicht nur für jene Stoffe die technisch und wirtschaftlich bessere Lösung dar, deren Herstellung nach dem Stand der Technik nur unter aufwändigen technischen Bedingungen - wie hohe Drucke und Temperaturen - möglich ist, sondern erschließt auch Möglichkeiten zur Entwicklung neuer Werkstoffe. Es war für den Fachmann nicht zu erwarten, dass mit hohen Übergangsmetallgehalten in einer aus nicht oder gering kondensierten C-N-H-Verbindungen und Übergangsmetall bestehenden Reaktionsmischung kubische Phasen aufweisende Übergangsmetallverbindungen im C-N-H-Stoffsystem erhalten werden. Diese Verbindungen können - analog den übergangsmetallhaltigen Verbindungen im graphitischen Kohlenstoffnitrid, Me-g-C₃N₄ - als übergangsmetallhaltige Verbindungen im kubischen Kohlenstoffnitrid, Me-c-C₃N₄ betrachtet werden. Bei der Wärmebehandlung der erfindungsgemäßen Übergangsmetallverbindung in dem dritten Temperaturbereich zwischen 520°C und 700°C ist zum Beispiel ein Nickeltransport in der Gasphase zu beobachten. Diese Beobachtung lässt die Schlussfolgerung zu, dass bei der erfindungsgemäßen Wärmebehandlung der erfindungsgemäßen Übergangsmetallverbindungen dem tetragonalen Nickel(0)tetracarbonylkomplex analoge, tetragonale Tetraisocyanübergangsmetall(0)-komplexe gebildet werden, die in situ für die Bildung der im kubischen Kristallgitter vorliegenden Stoffe in Betracht kommen. Die Verwendung von kubische Phasen aufweisenden tetragonalen Isocyanübergangsmetall(0)komplexen als reaktive Template zur Herstellung von kubische Karbid- und/oder Nitrid- und/oder Carbonitrid-Phasen enthaltenden Stoffen ist ebenso Gegenstand der Erfindung. Erfindungsgemäße Übergangsmetallverbindungen, die beispielsweise ein dem Nickelcarbid analoges Kristallgitter aufweisen und die der genannten weiteren Wärmebehandlung in dem dritten Temperaturbereich ausgesetzt werden, gehen überraschenderweise in Reaktionsprodukte über, welche im Röntgenpulverdiagramm Bragg-Reflexe zeigen, denen zufolge Stoffe in einer kubischen, dem Diamant ähnlichen, Raumgruppe vorliegen. Dabei wurden beispielsweise folgende d-Werten ermittelt: 2,045vs, 1,774s, Schwankungsbreite: ±0,01 (Zum Vergleich: Kubischer Kohlenstoff d-Werte: 2,043vs , 1,769w , 1,251s).

Zudem kann beispielsweise nach der Zugabe von Bor-Pulver und/oder Bor-Verbindungen wie zum Beispiel Lithiumborid LiB₁₂ und/oder nitridbildenden Elementen und/oder deren Verbindungen die weitere Wärmebehandlung im dritten Temperaturbereich durchgeführt werden. Aus den erfindungsgemäßen Übergangsmetallverbindungen und Bor-Pulver und/oder Borverbindungen bestehenden Reaktionsmischungen wird bei Wärmebehandlungstemperaturen über 500°C kubisches Bornitrid gebildet. Werden im Röntgendiffraktogramm der Reaktionsprodukte aus solchen Wärmebehandlungen dem kubischem Bornitrid zuzuordnende Bragg-Reflexe gefunden, so sind diese Bragg-Reflexe ein Nachweis für das Vorliegen von erfindungsgemäßen Übergangsmetallverbindungen in der zur Thermolyse verwendeten Reaktionsmischung.

In vorteilhaften Ausgestaltungen des erfindungsgemäßen Verfahrens kann auch die weitere Wärmebehandlung ein- oder mehrstufig oder pendelnd innerhalb des dritten Temperaturbereichs durchgeführt werden. Es besteht auch die Möglichkeit, dass die dritte Wärmebehandlung derart durchgeführt wird, dass sie den zweiten und dritten Temperaturbereich übergreift. Des Weiteren besteht die Möglichkeit, dass die Wärmebehandlung innerhalb des dritten Temperaturbereichs über einen Zeitraum zwischen 5 Minuten und 500 Stunden kontinuierlich oder in Zeitintervallen durchgeführt wird. Unter einem Zeitraum zwischen 5 Minuten und 500 Stunden sind insbesondere Zeiträume von 5min, 10min, 15min, 20min, 25min, 30min, 35min, 40min, 45min, 50min, 55min, 60min, 2h, 3h, 4h, 5h, 6h, 7h, 8h, 9h, 10h, 11h, 12h, 13h, 14h, 15h, 16h, 17h, 18h, 19h, 20h, 21h, 22h, 23h, 24h, 25h, 26h, 27h, 28h, 29h, 30h, 31h, 32h, 33h, 34h, 35h, 36h, 37h, 38h, 39h, 40h, 41h, 42h, 43h, 44h, 45h, 46h, 47h, 48h, 50h, 100h, 150h, 200h, 250h, 300h, 350h, 400h, 450h, 500h sowie entsprechende Zwischenwerte wie etwa 8min, 12min, 22min, 1,5h, 2,5h, 3,5h, 4,5h, 5,5h, 6,5h, 7,5h, 8,5h, 9,5h oder 48,5h, 50,5h 75,5h, 85,5h, 100,5h oder 255h zu verstehen.

Die Erfindung betrifft weiterhin Übergangsmetallverbindungen der allgemeinen Zusammensetzung MeₐC_{b}N_{c}H_{d} mit Me = Übergangsmetall oder Übergangsmetallgemisch, a = 1 - 4 , b = 6 - 9, c = 8 - 14, d = 0 - 8, wobei die Übergangsmetallverbindung mindestens eine direkt oder indirekt an das Übergangsmetall oder das Übergangsmetallgemisch gebundene C₆N₉H₄-Einheit aufweist, die als Di-imino-tri-s-triazin vorliegt. Die Übergangsmetallverbindungen enthalten Di-imino-tri-s-triazin als Baustein. Nur bei dem genannten hohen Anteil an Übergangsmetall in der Reaktionsmischung wird die Ausbildung von Metallclustern ermöglicht, deren Angebot an delokalisierten Elektronen bei der Kondensation der nicht oder nur gering kondensierten C-N-H-Verbindungen, wie zum Beispiel Melamin oder Dicyandiamid oder Cyanamid, die Bildung und Stabilisierung von Verbindungen zur Folge hat, in denen Di-imino-tri-s-triazin-Tautomere gebunden an Übergangsmetalle vorliegen. Die Ausbildung von graphitischen Strukturen bei der Verwendung der erfindungsgemäßen Übergangsmetallverbindungen wird zuverlässig verhindert. Damit können die erfindungsgemäßen Übergangsmetallverbindungen zur Herstellung wirtschaftlich interessanter Wertstoffe, insbesondere kubische Phasen aufweisende, Kohlenstoff und Stickstoff enthaltende Wertstoffe, dienen. Die erfindungsgemäßen Übergangsmetallverbindungen weisen ein dem Übergangsmetallcarbid vergleichbares Röntgendiffraktogramm auf. Die erfindungsgemäßen Übergangsmetallverbindungen können beispielsweise folgende Strukturformeln aufweisen: Me₃C₂HN(C₆N₉H₄), Me₆C₄H₂(C₆N₉H₄)₂ oder Me₃(C₆N₉H₄)₃. Die Übergangsmetallverbindungen weisen dabei vorteilhafterweise eine Metallcarbidstruktur auf.

Erfindungsgemäß werden die nach einem im Vorhergehenden beschriebenen Verfahren hergestellten Übergangsmetallverbindungen zur Herstellung von im kubischen Kristallgitter vorliegenden, Kohlenstoff und/oder Stickstoff enthaltenden Stoffen verwendet.

Die vorliegende Erfindung stellt einen möglichst einfachen Zugang zu den erfindungsgemäßen Stoffen bereit. Ein entscheidendes Merkmal des erfindungsgemäßen Verfahrens ist die Auswahl der Übergangsmetalle. Die Übergangsmetalle sind beispielsweise ausgewählt aus der Gruppe der Carbonyle bildenden Übergangsmetalle. Ein weiteres Merkmal des erfindungsgemäßen Verfahrens ist die Zusammensetzung des Reaktionsgemisches. Der molare Anteil an Übergangsmetall in der Reaktionsmischung beträgt mindestens 6 Prozent. Vorzugsweise werden Reaktionsmischungen mit einem molaren Anteil an Übergangsmetall zwischen 10 und 40 Prozent eingesetzt. Das Reaktionsgemisch kann als Schüttgut der Wärmebehandlung ausgesetzt werden. Bei auftretenden Schmelzphasen ist durch geeignete Maßnahmen wie Schütteln oder Rühren ein Entmischen der Reaktionspartner zu verhindern. Die Wärmebehandlung wird mehrstufig durchgeführt. Bei einer mehrstufigen Wärmebehandlung kann nach jeder Behandlungsstufe eine Zerkleinerung und Homogenisierung des erhaltenen Reaktionsprodukts vorgenommen werden. Die mehrstufige Wärmebehandlung besteht zudem aus einer Vorbehandlung und einer und/oder mehreren Hauptbehandlungen. Die Vorbehandlung umfasst insbesondere ein Erwärmen des Reaktionsgemisches auf eine und/oder mehrere Vorbehandlungstemperaturen, ein Verweilen bei diesen Vorbehandlungstemperaturen, Abkühlen, Zerkleinern und Homogenisieren des erhaltenen Vorbehandlungsprodukts. Die Vorbehandlungstemperaturen liegen in einem ersten Temperaturbereich zwischen 150°C und 400°C. Unter Vorbehandlungstemperaturen werden insbesondere Temperaturen von 150°C, 160°C, 170°C, 180°C, 190°C, 200°C, 210°C, 220°C, 230°C, 240°C, 250°C, 260°C, 270°C, 280°C, 290°C, 300°C, 310°C, 320°C, 330°C, 340°C, 350°C, 360°C, 370°C, 380°C, 390°C, 400°C sowie entsprechende Zwischenwerte wie etwa 245°C, 255°C, 265°, 275°C, 285°C, 335°C oder 345°C zu verstehen In diesem ersten Temperaturbereich können grundsätzlich Schmelzphasen auftreten, denen - abhängig von der Zusammensetzung der Reaktionsmischung - mit heftigen Gasausstoß verbundene Umwandlungsreaktionen folgen können. Die Dauer des Verweilens ist grundsätzlich ein unkritischer Parameter. Üblich ist eine Verweildauer bei der Vorbehandlung zwischen 10 min und einigen Stunden. Unter einem Zeitraum zwischen 10min und einigen Stunden sind insbesondere Zeiträume von 10min, 15min, 20min, 25min, 30min, 35min, 40min, 45min, 50min, 55min, 60min, 2h, 3h, 4h, 5h, 6h, 7h, 8h, 9h, 10h, 11h, 12h, 13h, 14h, 15h, 16h, 17h, 18h, 19h, 20h sowie entsprechende Zwischenwerte wie etwa 1,5h, 2,5h, 3,5h zu verstehen. Nach der Vorbehandlung liegt ein Produkt vor, in welchem das Übergangsmetall in einer teilweise reagierten Form vorliegen kann. Die Hauptbehandlung umfasst dann ein Erwärmen des in der Vorbehandlung erhaltenen, zerkleinerten und homogenisierten Produkts oder/und ein Erwärmen des Ausgangsreaktionsgemisches auf eine und/oder mehrere Hauptbehandlungstemperaturen, nämlich den zweiten und/oder dritten Temperaturbereichen, ein Verweilen bei diesen Temperaturen, Abkühlen auf Raumtemperatur, Zerkleinern und Homogenisieren. Die in der ersten Wärmebehandlung gemäß der ersten Hauptbehandlung für die Herstellung der erfindungsgemäßen Übergangsmetallverbindung angewendeten Temperaturen liegen in dem zweiten Temperaturbereich zwischen 300°C und 570°C, insbesondere zwischen 300°C und 540°C oder zwischen 400°C und 550°C. Mit der weiteren Wärmebehandlung der erfindungsgemäßen Übergangsmetallverbindung wird die erhaltene, zerkleinerte und homogenisierte erfindungsgemäße Übergangsmetallverbindung dem dritten Temperaturbereich zwischen 520°C und 700°C, vorzugsweise zwischen 550°C und 590°C ausgesetzt. Die Verweildauer liegt zwischen wenigen Minuten und mehreren Stunden. Dabei wird ein Stoff erhalten, der im Röntgenpulverdiagramm dem kubischen Kohlenstoff ähnliche Bragg-Reflexe aufweist. Wird der erfindungsgemäßen Übergangsmetallverbindung und/oder dem durch die weitere Wärmebehandlung erhaltenen Stoff ein Nitrid- und/oder Carbid bildendes Element, beispielsweise elementares Bor und/oder eine Borverbindung zugemischt, die Mischung homogenisiert und einer weiteren Wärmebehandlung im Temperaturbereich von 500°C bis 700°C, insbesondere zwischen 550°C und 620°C, ausgesetzt, - bei einer Verweildauer zwischen wenigen Minuten und mehreren Stunden - dann wird ein weiteres Reaktionsprodukt erhalten, welches im Röntgenpulverdiagramm beispielsweise dem kubischen Bornitrid ähnliche Bragg-Reflexe aufweist.

Wärmebehandlungen von C-N-H-Verbindungen und Übergangsmetalle enthaltenden Reaktionsgemischen können in normalen für die Reaktion geeigneten Behältern aus Metall, Glas oder Quarzglas durchgeführt werden. Bei der Wärmebehandlung entstehende flüchtige Nebenprodukte können vorzugsweise bei und/oder nach jedem Behandlungsschritt abgetrennt werden, beispielsweise durch Entweichenlassen, durch Diffundieren oder Absorbieren. Die Wärmebehandlung kann bei Unterdruck und/oder Normaldruck oder/und bei mäßigem Überdruck oder/und bei durch Anlegen eines äußeren Drucks erzeugten hohen Drucken durchgeführt werden. Die Wärmebehandlung kann mit oder ohne Schutzgas durchgeführt werden. Aus der Wärmebehandlung erhaltene Reaktionsprodukte liegen bevorzugt als reproduzierbare Feststoffe vor.

Untersuchungen und Überlegungen lassen erwarten, dass mit Hilfe der erfindungsgemäßen kubische Phasen aufweisenden, Kohlenstoff und Stickstoff enthaltenden Stoffe, neue Werkstoffe zugänglich sein können. Die nach dem erfindungsgemäßen Verfahren herstellbaren Verbindungen und Stoffe können weitere Eigenschaften aufweisen, die ihre Verwendung auf den unterschiedlichsten Gebieten vorteilhaft machen, z.B. als Katalysatoren in organischen Reaktionen, als Festkörperelektrolyte, als Energiespeicher, Sensoren, Halbleiter, Füllstoffe, Schleif- und Poliermittel, Keramik und Cermets. Die Eigenschaften der erfindungsgemäßen Stoffe können verändert werden, wenn weitere Elemente und/oder deren Verbindungen beispielsweise Carbide, Nitride, Boride, Cyanide und/oder Cyanokomplexe der Reaktionsmischung zugesetzt werden. Auch die Herstellung und Verwendung solcher weitere Elemente enthaltender metallhaltiger, insbesondere kubische Phasen aufweisender Kohlenstoff und Stickstoff enthaltender Stoffe ist Gegenstand der vorliegenden Erfindung.

Weitere Merkmale der Erfindung ergeben sich aus den Abbildungen sowie aus den nachfolgenden Beispielen. Hierbei können die einzelnen Merkmale jeweils für sich oder zu mehreren in Kombination miteinander bei einer Ausführungsform der Erfindung verwirklicht sein. Die folgenden Beispiele belegen die Erfindung, schränken sie aber nicht in ihrer Breite ein. Des Weiteren belegen die folgenden Beispiele den Einsatz verschiedener Übergangsmetalle und Übergangsmetallverbindungen wie auch die Verwendung der erfindungsgemäßen Verbindungen im Reaktionssystem Kohlenwasserstoffe - Ammoniak. Abhängig von den Reaktionsparametern Metallkonzentration in der Reaktionsmischung, Aufheizgeschwindigkeit, Gasdruck, Temperatur und Dauer der Wärmebehandlung werden verschiedene Strukturtypen der erfindungsgemäßen Verbindungen erhalten.

### Beispiel 1:

Wärmebehandlung einer Reaktionsmischung im molaren Verhältnis Nickel zu Dicyandiamid = 1 : 4,2 zur Herstellung einer Übergangsmetallverbindung.

Aus Nickelpulver und Dicyandiamid im molaren Mischungsverhältnis 1 : 4,2 wurde durch intensives Mischen eine homogene Mischung hergestellt. 2,5 g dieser Reaktionsmischung wurden in einen mit einer Druckregulierungsvorrichtung versehenen Glasreaktor gegeben. Die Mischung wurde zunächst aufgeheizt bis zur beginnenden Schmelze des Dicyandiamid und bei dieser Temperatur (ca. 205 °C) ca. 2 Minuten gehalten. Während dieser Phase wurde der Reaktor geschüttelt, um eine Entmischung durch ein Absitzen der Nickel-Partikel zu vermeiden. Nach Einsetzen der stark exothermen und durch einen Gasstoß erkennbaren Zersetzungsreaktion des Dicyandiamid und gleichzeitigem Temperaturanstieg des Reaktionsgutes auf ca. 360 °C wurde ein Druckausgleich vorgenommen. In der darauf folgenden Wärmebehandlung wurde das vorliegende Reaktionsgemisch im Verlauf von 30 Minuten auf 520 °C hochgeheizt und anschließend für die Dauer von 20 Minuten bei einer Temperatur zwischen 520 und 530°C gehalten. Nach Abkühlen auf Raumtemperatur und Entleeren des Reaktors wurde als Reaktionsprodukt ein olivbraunes Pulver erhalten, charakterisiert durch folgende d-Werte der Bragg-Reflexe: 3,253w, 2,933w, 2,294s, 2,172s, 2,029vs, 1,577s (Die Zusätze zu den d-Werten bedeuten: w = schwach, s = stark; vs = sehr stark).

Das als Reaktionsprodukt erhaltene Pulver wurde ohne weitere Aufarbeitung einer Elementaranalyse unterzogen. Eine C - N - H - O - Verbrennungsanalyse lieferte die folgenden Werte in Gewichtsprozent: Kohlenstoff 22,9, Stickstoff 34,07, Wasserstoff 1,16, Sauerstoff 1,68 und Nickel 40,19 (aus Differenz auf 100). Aus den Werten der Elementaranalyse wird rechnerisch folgende stöchiometrische Zusammensetzung des Reaktionsprodukts erhalten: Ni₃C₈N₁₀H₅. Bei der Herstellung des im Beispiel 1 beschriebenen Reaktionsprodukts wurde ein Teil der Wärmebehandlung unter NH₃- Druck durchgeführt. Mit der Summenformel Ni₃C₈N₁₀H₅ liegt eine Verbindung vor, in welcher ein (C₆N₉H₄)-Rest über ein -N=CH-C mit einem Me₃-Cluster verbunden ist. Die Verbindung hat die Struktur: Ni₃C₂HN(C₆N₉H₄) und kann wie folgt dargestellt werden:

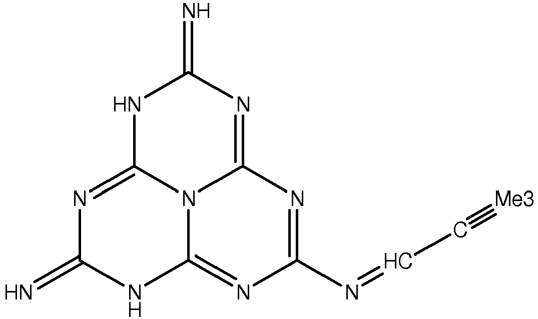

### Beispiel 2:

Wärmebehandlung einer Reaktionsmischung im molaren Verhältnis Nickel zu Dicyandiamid = 1 : 2,15 zur Herstellung einer Übergangsmetallverbindung.

Es wurde eine Reaktionsmischung aus Nickelpulver und Dicyandiamid im molaren Verhältnis 1 : 2,15 hergestellt. Die Reaktionsmischung wurde in einen Glasreaktor gefüllt. Der Reaktor wurde evakuiert, die Reaktionsmischung aufgeheizt auf ca. 200 - 230°C, Schmelzphase, Schütteln, geringer Gasstoß. Dann wurde das Reaktionsgemisch während 20 Minuten auf 520°C hochgeheizt und bei dieser Temperatur 40 Minuten gehalten. Nach Abkühlen wurde ein braunes Reaktionsprodukt erhalten. Nach Zerkleinern und Homogenisieren wurde das Reaktionsprodukt ohne weitere Aufarbeitung einer Elementaranalyse unterzogen. Eine C - N - H - O - Verbrennungsanalyse lieferte die folgenden Werte in Gewichtsprozent: Kohlenstoff 22,6, Stickstoff 29,8, Wasserstoff 1,14, Sauerstoff 1,85 und Nickel 44,61 (aus Differenz zu 100 Gew.-%). Das Reaktionsprodukt weist folgende d-Werte auf: 2,29s, 2,17s, 2,0289vs, 1,57s. Aus den Werten der Elementaranalyse wird rechnerisch folgende stöchiometrische Zusammensetzung des Reaktionsprodukts erhalten: Ni₃C₈N₉H₅. Es liegt eine dimere Verbindung vor: (C₆N₉H₄)-CH=C=Me₂-Me-Me-Me₂=C=HC-(C₆N₉H₄). Die entsprechende Strukturformel Ni₆C₄H₂(C₆N₉H₄)₂ kann wie folgt dargestellt werden (mit Me = Ni):

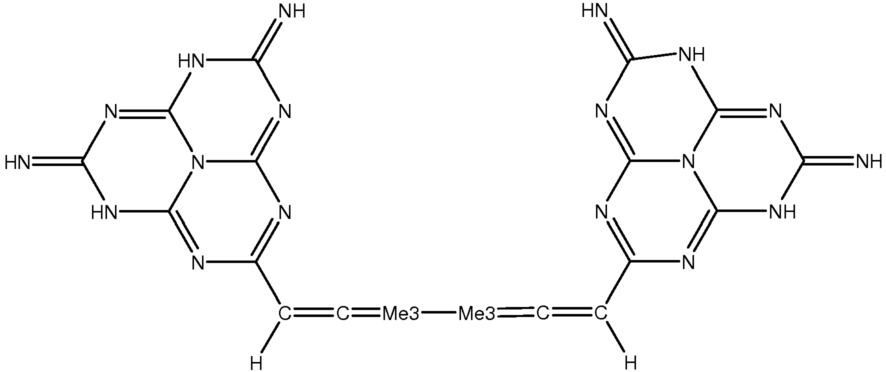

### Beispiel 3:

Mit einer Reaktionsmischung bestehend aus Dicyandiamid und Nickelpulver im molaren Mischungsverhältnis 4,5 : 1 wurde nach dem im Beispiel 1 beschriebenen Verfahren bei einer ersten Wärmebehandlungstemperatur von 400°C und einer Behandlungsdauer von 100 Minuten eine Übergandsmetallverbindung hergestellt. 0,5g dieses Reaktionsprodukts wurden in einen Glasreaktor gegeben, der befüllte Reaktor wurde mit einer offenen Kapillare versehen und in einen Rohrofen eingebracht. Das so in den Rohrofen eingebrachte Reaktionsprodukt wurde einer zweiten Wärmebehandlungstemperatur von 570°C - 580°C bei einer Verweildauer von 30 Minuten ausgesetzt. Nach Abkühlen wurde ein graubraunes Pulver als Reaktionsprodukt erhalten. Die durch Röntgenbeugung mit einem Pulverdiffraktometer erhaltenen d-Werte 2,054vs und 1,780s sind den für die kubische Kohlenstoff-Phase bekannten d-Werten von 2,043 und 1,769 sehr ähnlich.

### Beispiel 4:

Eine Reaktionsmischung bestehend aus Dicyandiamid, Nickelpulver und Manganpulver im molaren Verhältnis 8 : 1 : 1 wurde nach dem in Beispiel 1 beschriebenen Verfahren behandelt. Wärmebehandlungstemperatur: 500°C, Verweildauer: 60 Minuten. Erstes Reaktionsprodukt: Graues Pulver mit folgenden d-Werten: 2,300s, 2,158s, 2,033vs, 1,577s. 0,7 g des homogenisierten Reaktionsprodukts/Pulvers wurden anschließend mit 0,15 g amorphem Bor-Pulver intensiv gemischt und diese Mischung in einen Quarzglasreaktor eingebracht. Der mit einer Druckregulierungsanordnung ausgestattete, befüllte Reaktor wurde in einen Behandlungsofen gestellt und mit einer Verweildauer von 4,5 Stunden einer weiteren Wärmebehandlung bei einer Temperatur von 580°C ausgesetzt. Als weiteres Reaktionsprodukt wurde ein braunes Pulver erhalten, charakterisiert durch folgende d-Werte der Bragg-Reflexe: d-Werte: 2,089vs, 1,791s, 1,765w.

Die gefundenen d-Werte von 2,089vs und 1,791s liegen im Bereich der für kubisches Bornitrid bekannten Bragg-Reflexe mit den d-Werten 2,078vs und 1,804s. Als weiteres (End-)Reaktionsprodukt liegt eine Nickel, Mangan, Kohlenstoff, Stickstoff, Wasserstoff und Bor enthaltende Verbindung vor. Diese Beobachtung offenbart, dass die bei der weiteren Wärmebehandlung von Übergangsmetallverbindungen entstehenden kubischen Kohlenstoff-Phasen bei Anwesenheit von Bor in der Reaktionsmischung in situ als reaktive Template wirken unter Bildung von im kubischem Bornitrid - Kristallgitter vorliegenden Verbindungen. Dies beweist die Existenz eines im kubischen Gitter vorliegenden Kohlenstoff und Stickstoff enthaltenden Stoffes, welcher befähigt ist, die kubische Struktur bei der Bildung eines Nitrides weiterzugeben.

Für das in Beispiel 4 aus Dicyandiamid, Nickelpulver und Manganpulver im molaren Verhältnis 8 : 1 : 1 bei 500°C und 60 Minuten Verweildauer beschriebene erste Reaktionsprodukt mit den d-Werten 2,30s, 2,158s, 2,033vs, 1,57s wurden bei einer Elementaranalyse folgende Werte erhalten: C 27,85 Gew.-%, H 1,58 Gew.-%, N 48,67 Gew.-% , Ni/Mn = 21,9 Gew.-% (Differenz auf 100 Gew.-%). Summenformel: MeC₆N₉H₄ (Me = (Ni/Mn)). Die Strukturformel Me₃(C₆N₉H₄)₃ kann wie folgt dargestellt werden (mit Me = (Ni/Mn)):

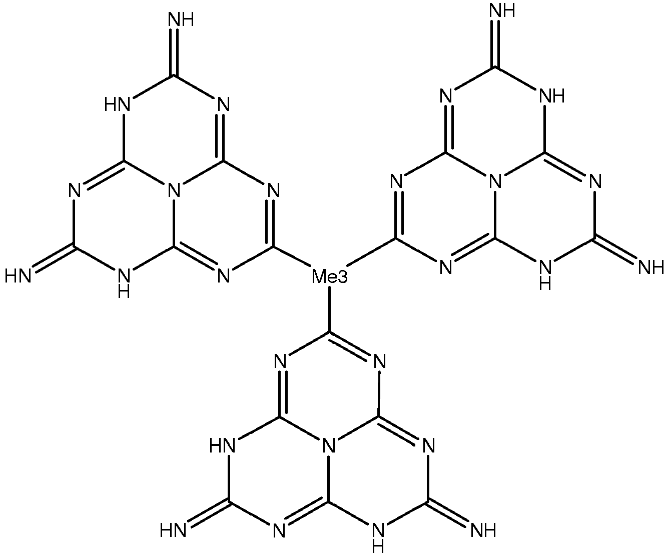

Eine weitere Reaktionsmischung wie in Beispiel 4 nur mit Nickelpulver, molares Verhältnis Dicyandiamid : Nickel = 4 : 1 , gleiche Versuchsparameter, ergab ein Reaktionsprodukt mit den d-Werten: 3,26s, 2,29s, 2,17s, 2,028vs, 1,57s und folgenden Werten der chemischen Elementaranalyse: C 28,44%, H 1,68%, N 47,93%, Differenz auf 100 = Metall. Summenformel: NiC₆N₉H₄; Strukturformel: Ni₃(C₆N₉H₄)₃ (siehe auch Beispiel 4; Me = Ni).

Bei der Wärmebehandlung einer Reaktionsmischung entsprechend dem Stand der Technik, bestehend aus Dicyandiamid und 5,4 Mol.% Nickel, Behandlungsdauer 50h bei einer Temperatur von 570°C, wurde eine Verbindung mit der Zusammensetzung Ni(C₆N₉H₄)₃ erhalten, charakterisiert durch einen d-Wert von 3,23. Bei diesem Thermolyseprodukt ist das Metall in ein graphitisches Gitter polymerer Heptazinringe eingelagert. Bei der Thermolyse der erfindungsgemäßen Übergangsmetall-verbindungen, wie beispielsweise Ni₃(C₆N₉H₄)₃, wird dagegen im kubischen Kristallgitter vorliegender Kohlenstoff erhalten, charakterisiert durch die d-Werte 2,054vs, 1,77s und 1,25. Die auffälligen Unterschiede der Eigenschaften beider Verbindungen lassen sich plausibel damit erklären, dass die C₆N₉H₄-Moleküle in zwei tautomeren Formen vorliegen. Im Ni(CₑN₉H₄)₃ liegt das C₆N₉H₄ als Di-amino-tri-s-triazin vor, im Ni₃(C₆N₉H₄)₃ dagegen als Di-imino-tri-s-triazin. Die Bildung von stabilen Di-imino-tri-s-triazin-Tautomeren bei der Wärmebehandlung von Reaktionsmischungen bestehend aus Dicyandiamid oder ähnlichen gering kondensierten C-N-H-Verbindungen und hohen Anteilen an Übergangsmetall ist auf das Vorliegen von Metallclustern und dem damit vorhandenen Angebot an delokalisierten Elektronen zurückzuführen.

Bei den oben genannten Verbindungen Ni₃C₈N₁₀H₅ (Beispiel 1) und Ni₃C₈N₉H₅ (Beispiel 2) sind die Di-imino-tri-s-triazin-Bausteine in den beschriebenen Strukturformeln zu erkennen. Betrachtet man das Di-imino-tri-s-triazin-Molekül so erkennt man, dass die Imino-gruppen als an Stickstoff gebundene Isocyanwasserstoff-Bausteine vorliegen. Diese Bausteine führen bei der Thermolyse von Übergangsmetalldi-imino-tri-s-triazin-Verbindungen zur Bildung von Übergangsmetallisocyankomplexen.

### Beispiel 5:

Durch intensives Mischen wurde eine Reaktionsmischung bestehend aus Cyanamid, Nickelpulver, Manganpulver, Zinkcyanidpulver und Borpulver im molaren Verhältnis 2,8 : 1 : 1 : 1 : 6,3 hergestellt. 2,6 g dieser Mischung wurden in ein Nickelrohr (Innendurchmesser 6,0 mm) gefüllt, das Rohr wurde beidseitig verschlossen und in einen Behälter mit Innendurchmesser 12 mm eingebracht. Der Raum zwischen Behälter und Rohr wurde mit Melamin aufgefüllt, der Behälter verschlossen und in einen Kammerofen gestellt. Nach einer ersten Wärmebehandlung über 90 Minuten bei 540 - 560°C erfolgte eine modifizierte Hauptbehandlung mit einer Dauer von 4 Tagen, wobei im Wechsel von jeweils 12 Stunden der Ofen auf folgenden Temperaturen gehalten wurde: 590, 540, 600, 560, 610, 540, 620, dann 6 Stunden 630 und 9 Stunden 660°C. Als Reaktionsprodukt wurden 1,8 g eines schwarzbraunen Pulvers erhalten, charakterisiert durch folgende d- Werte der Bragg-Reflexe: 4,757s, 2,691s, 2,116vvs, 2,0351w, 1,835vs, 1,675s, 1,297s und 1,107s.

Die gefundenen d-Werte 2,116vvs und 1,835vs und 1,297s zeigen Ähnlichkeit mit dem für kubisches Bornitrid vorliegenden Bragg-Reflexen des Röntgenpulverdiagramm. Der Abstand beider Reflexe 2,116 und 1,835 beträgt 0,281, bei c-BN liegt dieser Wert bei 0,274. Die Temperaturbeständigkeit - 9 Stunden bei 660°C - kann als ein weiteres Indiz für das Vorliegen eines kubisches Bornitrid enthaltenden Stoffes gewertet werden.

### Beispiel 6:

Herstellung einer Übergangsmetallverbindung der Zusammensetzung MeC₆N₉H₄ mit Me = Ni.

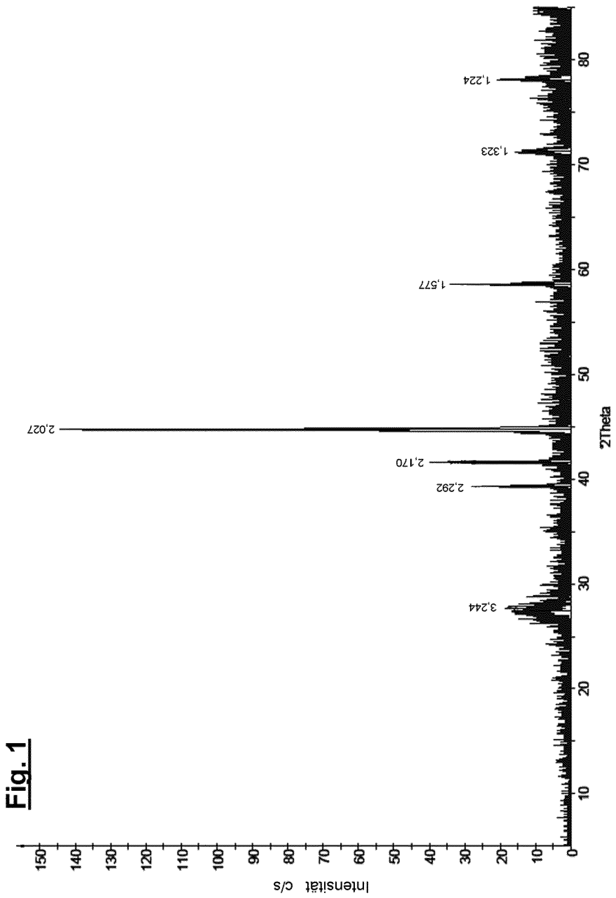

Aus 0,7 g Nickelpulver und 4,3 g Dicyandiamid wurde durch intensives Mischen eine homogene Mischung hergestellt. Die gesamte Menge der Reaktionsmischung wurde in einem offenen Quarzreagenzglas über einer Flamme bis zur einsetzenden exothermen Zersetzungsreaktion des Dicyandiamid erhitzt. Dann wurde das Reagenzglas verschlossen und in einen auf ca. 540°C vorgeheizten Kammerofen gestellt. Nach 45 Minuten wurde das Reagenzglas bei einer Temperatur von 535°C entnommen. Es wurden 3,2g hellbraunes, nicht magnetisches Reaktionsprodukt erhalten. Die Ergebnisse der Elementaranalyse des homogenisierten Produkts in Gewichtsprozent: C 28,44, N 47,93, H 1,68, und Nickel aus Differenz zu 100: 21,95. Das Produkt zeigt folgende Bragg-Reflexe: 3,244s, 2,292s, 2,170s, 2,027vs, 1,577s , 1,224s (siehe Figur 1).

Das in Beispiel 6 beschriebene Reaktionsprodukt wurde erhalten durch Wärmebehandlung einer Reaktionsmischung bei atmosphärischem Druck. Die Elementaranalyse ergab die Summenformel NiC₆N₉H₄. Die Verbindung weist ein dem Nickelcarbid Ni₃C analoges Gitter auf, weshalb diese Verbindung in der Struktur Ni₃(C₆N₉H₄)₃ vorliegt. Die entsprechende Strukturformel Ni₃(C₆N₉H₄)₃ kann dem Beispiel 4 entnommen werden. In dieser Verbindung mit trimerer Struktur ist je ein Ni-Atom des Ni₃-Cluster mit je einem Di-imino-tri-s-triazin verbunden.

### Beispiel 7:

Herstellung eines Reaktionsproduktes, welches im kubischen Kristallgitter vorliegenden Kohlenstoff enthält.

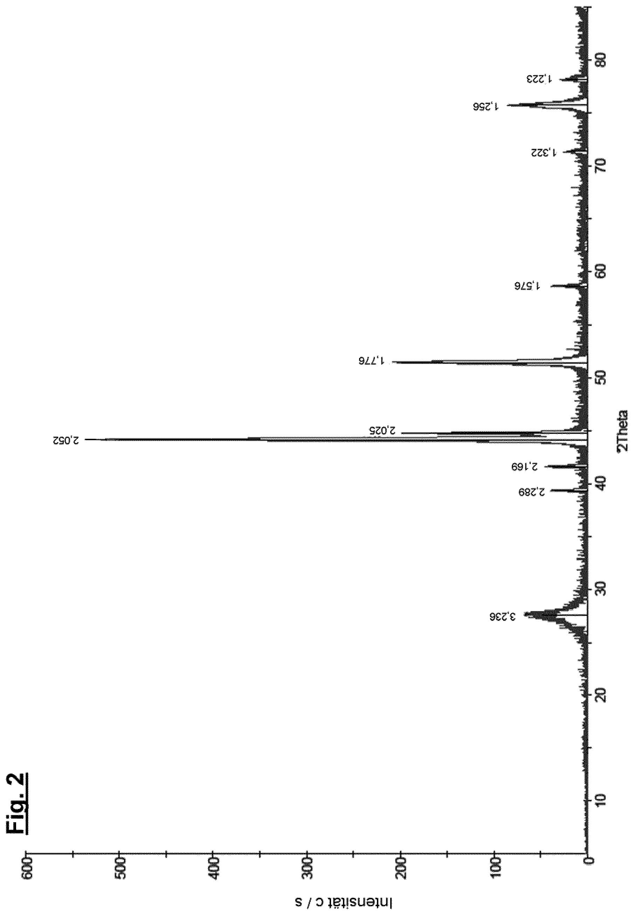

Die Herstellung dieses Reaktionsproduktes ist betreffend Reaktionsmischung, eingesetzte Menge und Verfahrensablauf einschließlich des Stadium der exothermen Zersetzung von Dicyandiamid identisch mit der in Beispiel 6 beschriebenen Vorgehensweise. Nachdem das Reagenzglas verschlossen wurde, wurde es in einen auf ca. 560°C vorgeheizten Kammerofen gestellt. Nach 45 Minuten wurde das Reagenzglas bei einer Temperatur von 555°C entnommen. Es wurden 2,4g eines braungrauen, magnetischen Reaktionsprodukts erhalten. Die Ergebnisse der Elementaranalyse des homogenisierten Produkts in Gewichtsprozent: C 28,68, N 43,10, H 1,50, Nickel aus Differenz zu 100: 26,72. Das Produkt zeigt folgende Bragg-Reflexe: 3,236s, 2,289w, 2,169w, 2,052vs, 2,025s, 1,776s, 1,256s (siehe Figur 2).

### Beispiel 8:

Herstellung einer Übergangsmetallverbindung der Zusammensetzung MeC₆N₉H₄ mit Me = 0,5 Ni/0,5 Mn.

Die Herstellung dieser Übergangsmetallverbindung ist in Beispiel 4 beschrieben. Es handelt sich um das dort beschriebene erste Reaktionsprodukt, in welchem Dicyandiamid, Nickelpulver und Manganpulver im molaren Verhältnis 8 : 1 : 1 umgesetzt wurden bei 500°C und einer Verweildauer von 60 Minuten. Die Elementaranalyse des erhaltenen grauen Reaktionsprodukts ergab folgende Werte in Gewichtsprozent: C 27,85, N 48,67, H 1,58, Ni/Mn = 21,9. Struktur:Me₃(C₆N₉H₄)₃ Me= Ni/Mn (siehe auch Beispiel 4).

Die Weiterverarbeitung dieser Übergangsmetallverbindung mit einem Zusatz von Bor-Pulver zu einem kubisches Bornitrid enthaltendem Reaktionsprodukt ist in Beispiel 4 beschrieben.

### Beispiel 9:

Verwendung der im Beispiel 8 beschriebenen Übergangsmetallverbindung der allgemeinen Zusammensetzung MeC₆N₉H₄ mit Me=0,5Ni/0,5Mn zur Herstellung von im kubischen Kristallgitter vorliegendem Kohlenstoff.

Das im Beispiel 8 beschriebene Reaktionsprodukt wurde etwa 10 mm hoch auf den Boden eines senkrecht angeordneten Quarzglasreaktor gegeben. Ein in diese Schüttung ca. 5 mm eintauchendes Nickelrohr wurde etwa mittig im Reaktor fixiert. Der geschlossene mit Druckausgleichvorrichtung ausgestattete Reaktor wurde in einem Kammerofen aufgeheizt, bei ca. 400°C mit Ammoniak geflutet und bei ca. 430°C wurde Methan durch das Nickelrohr mit einem Volumenstrom von einer Blase pro Sekunde in die Pulver-Schüttung eingeleitet. Die Temperatur im Kammerofen wurde während 30 Minuten von 430°C auf 575°C erhöht. Nach einer Verweildauer von 10 Stunden bei 570°C bis 577°C wurde der Ofen abgeschaltet und der Quarzglasreaktor nach einer Abkühlphase von 4 Stunden dem Ofen entnommen. Auf der Außenseite des Nickelrohres hatte sich in einem Bereich bis ca. 50 mm oberhalb vom unteren Ende des Nickelrohres ein schwarzer, lockerer, pulvriger Belag abgeschieden. Der Belag wurde vorsichtig von der Nickelrohraußenseite abgestreift, wobei ca. 80 mg eines schwarzen Pulvers erhalten wurden, charakterisiert durch die folgenden Bragg-Reflexe: 3,330s 2,056vs 2,045vs 2,027s 1,774s 1,256s.

Bei der Thermolyse von Di-imino-tri-s-triazin-Übergangsmetallcluster-Verbindungen entstehen oberhalb von ca. 545°C Produkte, welche im Röntgenpulverdiagramm Bragg-Reflexe zeigen, denen zufolge Stoffe in einer kubischen, dem Diamant ähnlichen, Raumgruppe vorliegen. Figur 2 zeigt die Bragg-Reflexe des in Beispiel 7 beschriebenen Reaktionsprodukts mit folgenden d-Werten: Melem 3,236s, Nickelcarbid 2,289w, 2,169w, 2,025s, 1,576w und eine kubische C-Phase mit den Werten 2,0524vs, 1,776s. Die in den Beispielen 6 und 7 beschriebenen Reaktionsprodukte wurden aus identischen Reaktionsmischungen hergestellt. Die Wärmebehandlungsparameter waren bei Beispiel 6: Dauer 45 Minuten bei einer Temperatur von 535°C und bei Beispiel 7: Dauer 45 Minuten bei einer Temperatur von 555°C. Beim Vergleich der Figuren 1 und 2 ist deutlich zu erkennen, dass in Beispiel 7 bei einer um 20°C höheren Wärmebehandlung die Bragg-Reflexe einer kubischen C-Phase auftreten und gleichzeitig die Bragg-Reflexe von Nickelcarbid geringere Intensität aufweisen.

Bei der Herstellung des in Beispiel 8 beschriebenen Reaktionsprodukts wurde ein aus 50% Nickel und 50% Mangan bestehendes Metallgemisch mit Dicyandiamid zur Reaktion gebracht. Das Reaktionsprodukt von Beispiel 8 enthält einen heteronuklearen Metallcluster entsprechend einem Me₃(C₆N₉H₄)₃, ein (Tri-(Di-imino-tri-s-triazin))-tri-(Nickel-Mangan). Die Weiterverarbeitung des in Beispiel 8 hergestellten Reaktionsprodukts ist in Beispiel 4 beschrieben. Dem Reaktionsprodukt wurde Bor-Pulver beigemischt und diese Mischung 4,5 Stunden bei einer Temperatur von 580°C wärmebehandelt. Bei der Thermolyse der in Beispiel 8 beschriebenen (Tri-(Di-imino-tri-s-triazin))-tri-(Nickel-Mangan)-verbindung in Gegenwart von Bor wurde ein Material erhalten dessen Röntgenpulverdiagramm die für kubisches Bornitrid charakteristischen Bragg-Reflexe zeigt: 2,089vs, 1,791s. Vergleichswerte für c-BN: 2,087vs, 1,807s.

Das Reaktionsprodukt von Beispiel 9 ist ein aus der Gasphase abgeschiedenes Produkt. Bei diesem Versuch wurde durch ein Nickelrohr Methan in eine aus dem Reaktionsprodukt von Beispiel 8 bestehende Schüttung geströmt bei einer Temperatur von 570°C. Das Reaktionsprodukt wurde auf der Nickelrohr-Außenseite oberhalb der Pulverschüttung als lockerer Belag abgeschieden. Die Bragg-Reflexe des in Beispiel 9 beschriebenen Produkts enthalten die Reflexe von in kubischer Modifikation vorliegendem Kohlenstoff und Nickel. In der (Tri-(Di-imino-tri-s-triazin))-tri-(Nickel-Mangan)-Schüttung wurden gasförmige Übergangsmetall-Isocyan-Komplexe Me(:CN-R)n mit R = H oder organischer Rest gebildet, die oberhalb der genannten Schüttung auf der Nickelrohraußenseite durch Reaktion mit Wasserstoff unter Abscheidung von kubischem Kohlenstoff und Metall zersetzt wurden. Methan wurde beim Durchströmen des heißen Nickelrohres metallvermittelt dehydriert, dabei freigesetzter Wasserstoff wurde vom Nickelrohr absorbiert, diffundierte zur Nickelrohraußenseite und war dort reaktiv verfügbar. Die Bildung von gasförmigen Übergangsmetall-Isocyan-Komplexen kann plausibel damit erklärt werden, dass bei der Thermolyse von Di-imino-tri-s-triazin-Molekeln entstehende Isocyan-Bausteine direkt mit Übergangsmetall reagieren und/ oder eine aus der Methan-Dehydrierung vorliegende Nickel-Carbin-Spezies Ni(CH) + mit Ammoniak und Übergangsmetall reagiert.

Di-imino-tri-s-triazin-Übergangsmetall-Verbindungen enthaltende Reaktionsprodukte weisen im Röntgenpulverdiagramm die Bragg-Reflexe für Melem und Metallcarbid auf, teilweise auch die Bragg-Reflexe der entsprechenden Metallnitride. Die Herstellung, die C-,N-,H-Werte der Elementaranalyse sowie die Bragg-Reflexe von einigen der untersuchten Reaktionsprodukte sind unter Beispiele aufgeführt. Die Beispiele 10 bis 19 sind Bestandteil von mit geringen Änderungen durchgeführten Versuchsreihen, weshalb die Beschreibungen sich nur im Detail unterscheiden. Bei diesen Versuchsreihen wurde festgestellt, dass auch Reaktionsprodukte erhalten werden, in denen kubisches Bornitrid vergesellschaftet mit dem Karbid, Borid, Nitrid ggf. auch dem Carbodiimid des eingesetzten Übergangsmetalls vorliegt (Beispiel 12). Als einfacher Nachweis für das Vorliegen von Di-imino-tri-s-triazin-Übergangsmetall-Verbindungen werden in diesen Beispielen die dem kubischen Kohlenstoff oder dem kubischem Bornitrid zuzuordnenden Bragg-Reflexe verwendet. Durch Zusatz von Bor zur Reaktionsmischung wird bei der Thermolyse der erfindungsgemäßen Verbindungen kubisches Bornitrid gebildet. Dass bei der Thermolyse der erfindungsgemäßen Übergangsmetallverbindungen Übergangsmetall-Isocyan-Komplexe auftreten, deren Reaktion mit Bor zu kubischem Bornitrid führt, wird mit der in Beispiel 20 beschriebenen Umsetzung von Tetra(phenylisocyanid)nickel(0) mit Bor zu kubischem Bornitrid nachvollzogen.

### Beispiel 10:

Herstellung und Nachweis einer Übergangsmetallverbindung der Zusammensetzung MeC₆N₉H₄ mit Me = Co.
a. Herstellung: Cobaltpulver und Dicyandiamid wurde im molaren Verhältnis 1:4 intensiv gemischt. Eine Teilmenge der homogenen Reaktionsmischung wurde in einen mit einer Druckregulierungsvorrichtung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über das Überdruckventil sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein graubraunes Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in ein Quarzglasreagenzglas gefüllt. Das befüllte Reagenzglas wurde in einen Druckautoklav gestellt und bei 30 bar Ammoniak und einer Temperatur zwischen 570°C und 585°C über einen Zeitraum von 5 Stunden wärmebehandelt. Nach Abkühlen wurde ein dunkelbraunes Pulver erhalten. Die Röntgendiffraktionsmessung des Pulvers zeigt folgende d-Werte: 2,085s und 1,810s. Die für kubisches Bornitrid charakteristischen d-Werte belegen, dass bei der Wärmebehandlung (520°C/1,5h) einer aus Cobaltpulver und Dicyandiamid im molaren Verhältnis 1:4 bestehenden Reaktionsmischung eine erfindungsgemäße Verbindung der Zusammensetzung CoC₆N₉H₄ gebildet wurde.

### Beispiel 11:

Herstellung und Nachweis einer Übergangsmetallverbindung der Zusammensetzung MeC₆N₉H₄ mit Me = Fe, Mn, Ni.
a. Herstellung: Dicyandiamid, Eisenpulver, Manganpulver und Nickelpulver wurden im molaren Verhältnis 40:2,5:2,5:5 intensiv gemischt. Eine Teilmenge der homogenen Reaktionsmischung wurde in einen mit einer Druckregulierungsvorrichtung ausgestatteten Quarzglasreaktor gegeben und dieser in einen auf 150°C vorgeheizten Ofen gestellt und die Ofentemperatur mit 10 °C pro Minute hochgefahren. Bei Erreichen der mit einem Gasstoß verbundenen Zersetzungstemperatur von Dicyandiamid wurde der Druck über die Druckregulierung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein dunkelgraues Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in ein Quarzreagenzglas gefüllt. Das befüllte Reagenzglas wurde in einem Druckautoklav für die Dauer von 5 Stunden einer Temperatur zwischen 575°C und 585 °C einem Druck von 30 bar Ammoniak ausgesetzt. Nach Abkühlen wurde ein schwarzbraunes Pulver erhalten. Die Röntgendiffraktionsmessung des Pulvers zeigt neben den Bragg-Reflexen für Fe₃C w und Mn₇C₃ w folgende d-Werte: 2,107 und 1,851. Diese im Bereich für kubisches Bornitrid liegenden d-Werte sind der Nachweis, dass bei der Wärmebehandlung (520°C/1,5h) einer aus Dicyandiamid, Eisen-, Mangan- und Nickelpulver im molaren Verhältnis 40:2,5:2,5:5 bestehenden Reaktionsmischung eine erfindungsgemäße Verbindung der Zusammensetzung MeC₆N₉H₄ mit Me= Fe+Mn+Ni gebildet wurde.

### Beispiel 12:

Herstellung und Nachweis einer Übergangsmetallverbindung der Zusammensetzung MeC₆N₉H₄ mit Me = Mn.
a. Herstellung: Dicyandiamid und Manganpulver wurden im molaren Verhältnis 4:1 intensiv gemischt. Eine Teilmenge der homogenen Reaktionsmischung wurde in einen mit einer Überdrucksicherung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein grüngraues Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500°C vorgeheizten Behandlungsofen gestellt. Die Ofentemperatur wurde mit 4°C pro Minute hochgefahren, bei Erreichen von 580 °C konstant gestellt und bei dieser Temperatur 5 Stunden gehalten. Nach Abkühlen wurde ein dunkelbraunes Pulver erhalten. Die Röntgendiffraktionsmessung des Pulvers zeigt neben den d-Werten von Mn₃N₂ w, Mn₇C₃ w und MnNCN vs zwei Reflexe bei 2,105 und 1,685. Diese Bragg-Reflexe werden einem mit kubischem Bornitrid vergesellschaftetem Stoff zugeschrieben.

### Beispiel 13:

Herstellung und Nachweis einer Übergangsmetallverbindung der Zusammensetzung MeC₆N₉H₄ mit Me = Fe.
a. Herstellung: Dicyandiamid und Eisenpulver wurden im molaren Verhältnis 4:1 intensiv gemischt. Eine Teilmenge der homogenen Reaktionsmischung wurde in einen mit einer Überdrucksicherung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein grüngraues Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500°C vorgeheizten Behandlungsofen gestellt. Die Ofentemperatur wurde mit 4°C pro Minute hochgefahren, bei Erreichen von 580°C konstant gestellt und bei dieser Temperatur 5 Stunden gehalten. Nach Abkühlen wurde ein dunkelbraunschwarzes Pulver erhalten. Die Röntgendiffraktionsmessung des Pulvers zeigt neben den d-Werten von Fe₃C , zwei deutliche Reflexe bei 2,106 und 1,872 für einen mit kubischem Bornitrid in Verbindung stehenden Stoff.

### Beispiel 14:

Herstellung und Nachweis einer Übergangsmetallverbindung der Zusammensetzung MeC₆N₉H₄ mit Me = Fe + Mn + Ni.
a. Herstellung: Dicyandiamid, Eisenpulver, Manganpulver und Nickelpulver wurden im molaren Verhältnis 40:5:2,5:2,5 intensiv gemischt. Eine Teilmenge der homogenen Reaktionsmischung wurde in einen mit einer Überdrucksicherung ausgestatteten Quarzglasreaktor gegeben und dieser in einen auf 150 °C vorgeheizten Ofen gestellt und die Ofentemperatur mit 10 °C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520 °C wurde die Temperatur für die Dauer von 90 Minuten konstant gehalten. Nach Abkühlen wurde ein sienabraunes Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500°C vorgeheizten Behandlungsofen gestellt. Die Ofentemperatur wurde mit 4°C pro Minute hochgefahren, bei Erreichen von 580°C konstant gestellt und bei dieser Temperatur 5 Stunden gehalten. Nach Abkühlen wurde ein dunkelbraunschwarzes Pulver erhalten. Die Röntgendiffraktionsmessung des Pulvers zeigt neben den d-Werten von Fe₃C zwei deutliche Reflexe bei 2,107 und 1,872 für einen mit kubischem Bornitrid in Verbindung stehenden Stoff. Ferner treten deutlich die für kubischen Kohlenstoff charakteristischen Bragg-Reflexe bei 2,049 und 1,775 auf.

### Beispiel 15:

Herstellung und Nachweis einer Übergangsmetallverbindung der Zusammensetzung MeC₆N₉H₄ mit Me = Fe + Ni.
a. Herstellung: Dicyandiamid, Eisenpulver und Nickelpulver wurden im molaren Verhältnis 40:5:5 intensiv gemischt. Eine Teilmenge der homogenen Reaktionsmischung wurde in einen mit einer Überdrucksicherung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein braunes, magnetisches Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500 °C vorgeheizten Behandlungsofen gestellt. Die Ofentemperatur wurde mit 4°C pro Minute hochgefahren, bei Erreichen von 580°C konstant gestellt und bei dieser Temperatur 5 Stunden gehalten. Nach Abkühlen wurde ein dunkelbraunes Pulver erhalten. Die Röntgendiffraktionsmessung des Pulvers zeigt neben den d-Werten von Fe₃C zwei Reflexe bei 2,107 und 1,873 für einen mit kubischem Bornitrid in Verbindung stehenden Stoff.

### Beispiel 16:

Herstellung und Nachweis einer Übergangsmetallverbindung der Zusammensetzung MeC₆N₉H₄ mit Me = Ni + Mangan + Niob.
a. Herstellung: Dicyandiamid, Nickelpulver, Manganpulver und Niobpulver wurden im molaren Verhältnis 40:5:2,5:2,5 intensiv gemischt. Eine Teilmenge der homogenen Reaktionsmischung wurde in einen mit einer Überdrucksicherung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein hellbraunes, in harten Brocken vorliegendes Produkt erhalten, welches zerkleinert und homogenisiert wurde.
b. Nachweis: Bor-Zusatz und Wärmebehandlung oberhalb 530 °C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500°C vorgeheizten Behandlungsofen gestellt. Die Ofentemperatur wurde mit 4°C pro Minute hochgefahren, bei Erreichen von 580°C konstant gestellt und bei dieser Temperatur 5 Stunden gehalten. Nach Abkühlen wurde ein dunkelbraunes heterogenes Produkt erhalten, welches zerkleinert und homogenisiert wurde. Die Röntgendiffraktionsmessung des Pulvers zeigt zwei deutliche Reflexe bei 2,049 und 1,775 für einen kubischen Kohlenstoff enthaltenden Stoff. Die für kubischen Kohlenstoff charakteristischen d-Werte belegen, dass bei der Wärmebehandlung einer aus Nickelpulver, Manganpulver und Niobpulver und Dicyandiamid im molaren Verhältnis 5:2,5:2,5:40 bestehenden Reaktionsmischung eine erfindungsgemäße Verbindung der Zusammensetzung MeC₆N₉H₄ mit Me = Ni+Mn+Nb gebildet wurde.

### Beispiel 17:

Herstellung und Nachweis einer Übergangsmetallverbindung der Zusammensetzung MeC₆N₉H₄ mit Me = Ni + Mangan + Tantal.
a. Herstellung: Dicyandiamid, Nickelpulver, Manganpulver und Tantalpulver wurden im molaren Verhältnis 40:5:3,75:1,25 intensiv gemischt. Eine Teilmenge der homogenen Reaktionsmischung wurde in einen mit einer Überdrucksicherung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein sienabraunes, nicht magnetisches, in harten Brocken vorliegendes Produkt erhalten, welches zerkleinert und homogenisiert wurde.
b. Nachweis: Bor-Zusatz und Wärmebehandlung oberhalb 530 °C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500°C vorgeheizten Behandlungsofen gestellt. Die Ofentemperatur wurde mit 4°C pro Minute hochgefahren, bei Erreichen von 580°C konstant gestellt und bei dieser Temperatur 5 Stunden gehalten. Nach Abkühlen wurde ein dunkelbraunes heterogenes Produkt erhalten, welches zerkleinert und homogenisiert wurde. Die Röntgendiffraktionsmessung des Pulvers zeigt zwei deutliche Reflexe bei 2,050 und 1,777 für einen kubischen Kohlenstoff enthaltenden Stoff.

### Beispiel 18:

Herstellung und Nachweis einer Übergangsmetallverbindung der Zusammensetzung MeC₆N₉H₄ mit Me = Ni + Mangan + Wolfram.
a. Herstellung: Dicyandiamid, Nickelpulver, Manganpulver und Wolframpulver wurden im molaren Verhältnis 40:5:2,5:2,5 intensiv gemischt. Eine Teilmenge der homogenen Reaktionsmischung wurde in einen mit einer Überdrucksicherung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein grüngraues, nicht magnetisches, Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500°C vorgeheizten Behandlungsofen gestellt. Die Ofentemperatur wurde mit 4°C pro Minute hochgefahren, bei Erreichen von 580°C konstant gestellt und bei dieser Temperatur 5 Stunden gehalten. Nach Abkühlen wurde ein dunkelbraunes homogenes Produkt erhalten, welches zerkleinert und homogenisiert wurde. Die Röntgendiffraktionsmessung des Pulvers zeigt zwei Reflexe bei 2,052 und 1,775 für einen kubischen Kohlenstoff enthaltenden Stoff.

### Beispiel 19:

Herstellung und Nachweis einer Übergangsmetallverbindung der Zusammensetzung MeC₆N₉H₄ mit Me = Ni + Mangan + Kupfer.
a. Herstellung: Dicyandiamid, Nickelpulver, Manganpulver und Kupferpulver wurden im molaren Verhältnis 40:5:2,5:2,5 intensiv gemischt. Eine Teilmenge der homogenen Reaktionsmischung wurde in einen mit einer Überdrucksicherung ausgestatteten Quarzglasreaktor gegeben und dieser in einen auf 150°C vorgeheizten Ofen gestellt und die Ofentemperatur mit 10°C pro Minute hochgefahren. Bei Erreichen der mit einem Gasstoß verbundenen Zersetzungstemperatur von Dicyandiamid wurde der Druck über die Überdrucksicherung sofort entlastet, das Ventil wurde danach geschlossen. Bei Erreichen einer Ofentemperatur von 520°C wurde die Temperatur für die Dauer von 90 Minuten konstant gehalten. Nach Abkühlen wurde ein hellbraunes, nicht magnetisches, Produkt erhalten, welches zerkleinert und homogenisiert wurde.
b. Nachweis: Bor-Zusatz und Wärmebehandlung oberhalb 530°C. 0,8 g des homogenisierten Produkts wurden mit 0,2 g amorphem Bor-Pulver intensiv gemischt und diese Mischung in einen Quarzglasreaktor gefüllt. Der befüllte Reaktor wurde mit einem Überdruckventil verschlossen und in einen auf 500°C vorgeheizten Behandlungsofen gestellt. Die Ofentemperatur wurde mit 4°C pro Minute hochgefahren, bei Erreichen von 580°C konstant gestellt und bei dieser Temperatur 5 Stunden gehalten. Nach Abkühlen wurde ein dunkelbraunes homogenes Produkt erhalten, welches zerkleinert und homogenisiert wurde. Die Röntgendiffraktionsmessung des Pulvers weist zwei Bragg-Reflexe bei 2,047 und 1,774 auf, charakteristisch für einen kubischen Kohlenstoff enthaltenden Stoff.

### Beispiel 20:

0,5 g von durch Umsetzung von Bis(1,5-cyclooctadien)nickel(0), NiCOD, mit Phenylisocyanid in Toluol erzeugtes kristallines Tetra(phenylisocyanid)nickel(0) wurden mit 0,15 g Bor intensiv gemischt. Die erhaltene Mischung wurde in ein Quarzreagenzglas gefüllt. Das befüllte Reagenzglas wurde in einen Autoklav gestellt und bei 30 bar Ammoniak einer Temperatur von 590°C ausgesetzt. In einem Zeitabstand von 0,5 Stunden wurde der Druck im Autoklaven um jeweils 2 bar abgesenkt, nach 7 Stunden und einem Druck von 2 bar erfolgte der Druckabbau in weiteren Schritten von 0,5 bar pro Stunde. Nach Abkühlen wurde ein schwarzbraunes Produkt erhalten. Die Röntgendiffraktionsmessung des Produkts zeigt folgende Werte: 2,089 und 1,810. Diese Werte entsprechen nahezu den für kubisches Bornitrid charakteristischen d-Werten: 2,089 und 1,810.

In der Tabelle 1 sind ausgewählte d-Werte der in den Beispielen 1 bis 20 beschrieben erfindungsgemäßen Übergangsmetallverbindungen und deren Pyrolyseprodukten aufgelistet. Dabei zeigen die Spalten d-W a, b, c, d, i und k charakteristische Bragg-Reflexe der erfindungsgemäßen Verbindungen. Kursiv gedruckte Werte entsprechen den Bragg-Reflexen der Pyrolyseprodukte der erfindungsgemäßen Verbindungen. Spalten d-W f, g und k in Fettdruck: Bragg-Reflexe im Bereich von kubischem Kohlenstoff; Spalten d-W l und m in Fettdruck: Bragg-Reflexe im Bereich von kubischem Bornitrid.

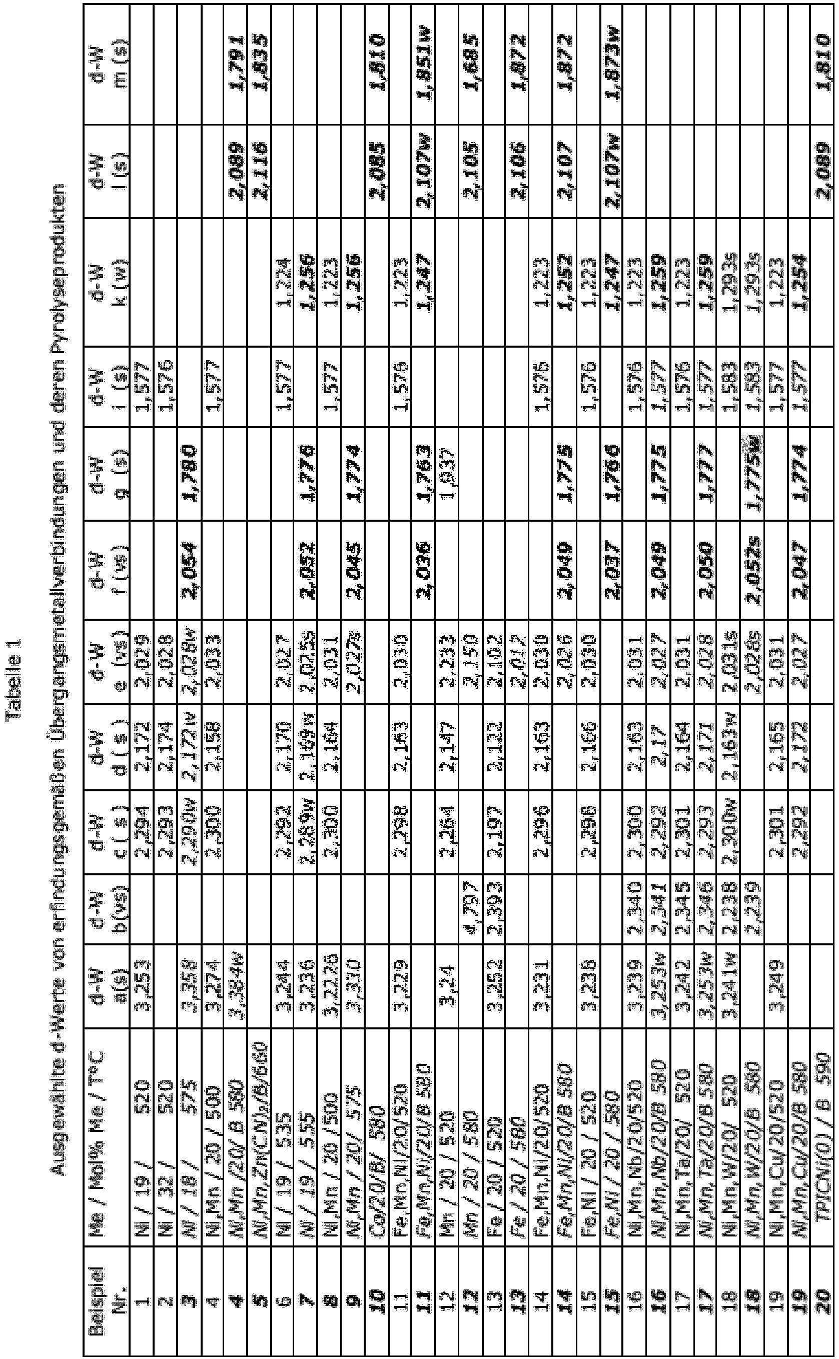

## Patentansprüche

1. Verfahren zur Herstellung von Übergangsmetallverbindungen der allgemeinen Zusammensetzung MeₐC_{b}N_{c}H_{d} mit Me = Übergangsmetall oder Übergangsmetallgemisch, a = 1 - 4, b = 6 - 9, c = 8 - 14, d = 0 - 8, wobei ein Reaktionsgemisch bestehend aus Übergangsmetallen und/oder Übergangsmetallverbindungen und nicht oder gering kondensierten C-N-H-Verbindungen einer mehrstufigen Wärmebehandlung ausgesetzt wird, wobei als nicht oder gering kondensierte C-N-H-Verbindungen Cyanamid und/oder Ammoniumdicyandiamid und/oder Dicyandiamid und/oder Melamin eingesetzt werden und der Gehalt an Übergangsmetallen und/oder Übergangsmetallverbindungen mindestens 6 Molprozent, bezogen auf das Reaktionsgemisch, beträgt und die mehrstufige Wärmebehandlung eine Vorbehandlung und eine oder mehrere Hauptbehandlungen umfasst, wobei die Vorbehandlung in einem ersten Temperaturbereich von 150°C und 400°C und eine erste Hauptbehandlung in einem zweiten Temperaturbereich zwischen 300°C und 570°C durchgeführt wird.

2. Verfahren nach Anspruch 1, **dadurch gekennzeichnet, dass** der Gehalt an Übergangsmetallen und/oder Übergangsmetallverbindungen 10 bis 40 Molprozent, bezogen auf das Reaktionsgemisch, beträgt.

3. Verfahren nach Anspruch 1 oder 2, **dadurch gekennzeichnet, dass** das Molverhältnis Übergangsmetall und/oder Übergangsmetallverbindung zu den nicht oder gering kondensierten C-N-H-Verbindungen jeweils zwischen 1:2 und 1:8 beträgt.

4. Verfahren nach Anspruch 1, 2 oder 3, **dadurch gekennzeichnet, dass** die Wärmebehandlung gemäß der ersten Hauptbehandlung ein- oder mehrstufig oder pendelnd innerhalb des zweiten Temperaturbereichs durchgeführt wird.

5. Verfahren nach einem der vorhergehenden Ansprüche, **dadurch gekennzeichnet, dass** die Wärmebehandlung gemäß der ersten Hauptbehandlung über einen Zeitraum zwischen 5 Minuten und 500 Stunden kontinuierlich oder in Zeitintervallen durchgeführt wird.

6. Verfahren nach einem der vorhergehenden Ansprüche, **dadurch gekennzeichnet, dass** die Übergangsmetalle und/oder Übergangsmetallverbindungen ausgewählt sind aus der Gruppe der als Katalysatoren wirksamen Übergangsmetalle oder dass die Übergangsmetalle und/oder Übergangsmetallverbindungen ausgewählt sind aus der Gruppe der Carbonyl-Komplexe bildenden Elemente oder dass als Übergangsmetalle Nickel und/oder Kobalt und/oder Mangan und/oder Eisen und/oder Platin und/oder Niob und/oder Wolfram und/oder Tantal und/oder Kupfer und/oder Zink oder Gemische davon eingesetzt werden.

7. Verfahren nach einem der vorhergehenden Ansprüche, **dadurch gekennzeichnet, dass** der aus nicht oder gering kondensierten C-N-H-Verbindungen und Übergangsmetallen und/oder Übergangsmetallverbindungen bestehenden Reaktionsmischung Cyanide und/oder Cyanokomplexe und/oder Isocyankomplexe zugesetzt werden, insbesondere solche, die eine kubische Gitterstruktur aufweisen.

8. Verfahren nach einem der vorhergehenden Ansprüche, **dadurch gekennzeichnet, dass** der aus nicht oder gering kondensierten C-N-H-Verbindungen und Übergangsmetallen und/oder Übergangsmetallverbindungen bestehenden Reaktionsmischung vor und/oder nach einer oder mehreren Wärmebehandlungen gemäß der ersten Hauptbehandlung im zweiten Temperaturbereich Bor-Pulver und/oder Bor-Verbindungen und/oder nitridbildende Elemente und/oder deren Verbindungen zugesetzt werden.

9. Verfahren nach einem der vorhergehenden Ansprüche, **dadurch gekennzeichnet, dass** nach der Wärmebehandlung gemäß der ersten Hauptbehandlung in dem zweiten Temperaturbereich zwischen 300°C und 570°C mindestens eine weitere Wärmebehandlung in einem dritten Temperaturbereich zwischen 520°C und 700°C erfolgt.

10. Verfahren nach Anspruch 9, **dadurch gekennzeichnet, dass** die weitere Wärmebehandlung nach einer Zugabe von Bor-Pulver und/oder Bor-Verbindungen und/oder nitridbildenden Elementen und/oder deren Verbindungen durchgeführt wird.

11. Verfahren nach Anspruch 9 oder 10, **dadurch gekennzeichnet, dass** die weitere Wärmebehandlung ein- oder mehrstufig oder pendelnd in dem dritten Temperaturbereich und/oder den zweiten und dritten Temperaturbereich übergreifend erfolgt.

12. Übergangsmetallverbindung der allgemeinen Zusammensetzung MeₐC_{b}N_{c}H_{d} mit Me = Übergangsmetall oder Übergangsmetallgemisch, a = 1 - 4 , b = 6 - 9, c = 8 - 14, d = 0 - 8, **dadurch gekennzeichnet, dass** die Übergangsmetallverbindung mindestens eine direkt oder indirekt an das Übergangsmetall oder das Übergangsmetallgemisch gebundene C₆N₉H₄-Einheit aufweist, die als Di-imino-tri-s-triazin vorliegt.

13. Übergangsmetallverbindung nach Anspruch 12, **dadurch gekennzeichnet, dass** die Übergangsmetallverbindung eine Metallcarbidstruktur aufweist.

14. Verwendung von nach einem der Ansprüche 1 bis 8 hergestellten Übergangsmetallverbindungen zur Herstellung von im kubischen Kristallgitter vorliegenden, Kohlenstoff und/oder Stickstoff enthaltenden Stoffen.

## Claims

1. Method for producing transition metal compounds of the general composition of MeₐC_{b}N_{c}H_{d}, wherein Me = transition metal or transition metal mixture, a = 1 - 4, b = 6 - 9, c = 8 - 14, d = 0 - 8, wherein a reaction mixture consisting of transition metals and/or transition metal compounds and non-condensed or slightly condensed C-N-H compounds is subjected to a multi-stage heat treatment, wherein as non-condensed or slightly condensed C-N-H compounds cyanamide and/or ammonium dicyandiamide and/or dicyandiamide and/or melamine are employed and the content of transition metals and/or transition metal compounds is at least 6 mole percent related to the reaction mixture, and the multi-stage heat treatment comprises a pre-treatment and one or several main treatments, wherein the pre-treatment is performed in a first temperature range between 150 °C and 400 °C and a first main treatment is performed in a second temperature range between 300 °C and 570 °C.

2. Method according to claim 1, **characterized in that** the content of transition metals and/or transition metal compounds is 10 to 40 mol percent related to the reaction mixture.

3. Method according to claim 1 or 2, **characterized in that** the molar ratio of transition metal and/or transition metal compound to the non-condensed or slightly condensed C-N-H compounds is each between 1:2 and 1:8.

4. Method according to claim 1, 2, or 3, **characterized in that** the heat treatment according to the first main treatment is performed in one- or multi-stage manner or in alternating manner within the second temperature range.

5. Method according to any one of the preceding claims, **characterized in that** the heat treatment according to the first main treatment is performed over a period of time between 5 minutes and 500 hours in continuous manner or in time intervals.

6. Method according to any one of the preceding claims, **characterized in that** the transition metals and/or transition metal compounds are selected from the group of the transition metals effective as catalysts or that the transition metals and/or transition metal compounds are selected from the group of the elements forming carbonyl complexes or that nickel and/or cobalt and/or manganese and/or iron and/or platinum and/or niobium and/or tungsten and/or tantalum and/or copper and/or zinc and/or mixtures thereof are employed as the transition metals.

7. Method according to any one of the preceding claims, **characterized in that** cyanides and/or cyano complexes and/or isocyan complexes, in particular those having a cubic lattice structure, are added to the reaction mixture consisting of non-condensed or slightly condensed C-N-H compounds and transition metals and/or transition metal compounds.

8. Method according to any one of the preceding claims, **characterized in that** boron powders and/or boron compounds and/or other nitride-forming elements and/or the compounds thereof are added to the reaction mixture consisting of non-condensed or slightly condensed C-N-H compounds and transition metals and/or transition metal compounds before and/or after one or more heat treatments according to the first main treatment in the second temperature range.

9. Method according to any one of the preceding claims, **characterized in that** after the heat treatment according to the first main treatment in the second temperature range between 300 °C and 570 °C at least one further heat treatment in a third temperature range between 520 °C and 700 °C is effected.

10. Method according to claim 9, **characterized in that** the further heat treatment is performed after addition of boron powder and/or boron compounds and/or other nitride-forming elements and/or the compounds thereof.

11. Method according to claim 9 or 10, **characterized in that** the further heat treatment is effected in one- or multi-step manner or in alternating manner in the third temperature range and/or encompassing the second and third temperature ranges.

12. Transition metal compound of the general composition of MeₐC_{b}N_{c}H_{d}, wherein Me = transition metal or transition metal mixture, a = 1 - 4, b = 6 - 9, c = 8 - 14, d = 0 - 8, **characterized in that** the transition metal compound has at least one C₆N₉H₄ unit directly or indirectly bound to the transition metal or the transition metal mixture, which is present as di-imino-tri-s-triazine.

13. Transition metal compound according to claim 12, **characterized in that** the transition metal compound has a metal carbide structure.

14. Use of transition metal compounds produced according to any one of claims 1 to 8 for producing materials containing carbon and/or nitrogen, present in the cubic crystal lattice.

## Revendications

1. Procédé de fabrication de composés de métaux de transition de la composition générale MeₐC_{b}N_{c}H_{d}, avec Me = métal de transition ou mélange de métaux de transition, a = 1 - 4, b = 6 - 9, c = 8 - 14, d = 0 - 8, un mélange de réaction, se composant de métaux de transition et / ou de composés de métaux de transition et de composés C-N-H non ou peu condensés, étant exposé à un traitement thermique en plusieurs étapes, du cyanamide et / ou du dicyandiamide d'ammonium et / ou du dicyandiamide et / ou de la mélamine étant mis en oeuvre en tant que composés C-N-H non ou peu condensés et la teneur en métaux de transition et / ou en composés de métaux de transition étant d'au moins 6 moles pour cent, par rapport au mélange de réaction et le traitement thermique en plusieurs étapes comprenant un prétraitement et un ou plusieurs traitements principaux, le prétraitement étant effectué dans une première plage de températures de 150° C et 400° C et un premier traitement principal étant effectué dans une deuxième plage de températures entre 300° C et 570° C.

2. Procédé de fabrication selon la revendication 1,
**caractérisé en ce que**
la teneur en métaux de transition et / ou en composés de métaux de transition est de 10 à 40 moles pour cent, par rapport au mélange de réaction.

3. Procédé de fabrication selon la revendication 1 ou 2,
**caractérisé en ce que**
le rapport molaire métal de transition et / ou composé de métaux de transition par rapport aux composés C-N-H non ou peu condensés se situe respectivement entre 1:2 et 1:8.

4. Procédé de fabrication selon la revendication 1, 2 ou 3,
**caractérisé en ce que**
le traitement thermique est effectué conformément au premier traitement principal, en une seule ou en plusieurs étapes ou de manière oscillante dans les limites de la deuxième plage de températures.

5. Procédé selon l'une des revendications précédentes,
**caractérisé en ce que**
le traitement thermique est effectué en continu ou suivant des intervalles de temps, conformément au premier traitement principal, sur une période entre 5 minutes et 500 heures.

6. Procédé selon l'une des revendications précédentes,
**caractérisé en ce que**
les métaux de transition et / ou composés de métaux de transition sont sélectionnés dans le groupe des métaux de transition, efficaces comme catalyseurs ou que les métaux de transition et / ou composés de métaux de transition sont sélectionnés dans le groupe des éléments formant des complexes carbonyles ou que du nickel et / ou du cobalt et / ou du manganèse et / ou du fer et / ou du platine et / ou du niobium et / ou du tungstène et / ou du tantale et / ou du cuivre et / ou du zinc ou des mélanges de ceux-ci sont utilisés comme métaux de transition.

7. Procédé selon l'une des revendications précédentes,
**caractérisé en ce que**
des cyanures et / ou cyano-complexes et / ou complexes cyaniques et / ou complexes isocyaniques sont ajoutés au mélange de réaction, se composant de composés C-N-H non ou peu condensés et de métaux de transition et / ou de composés de métaux de transition, en particulier ceux qui présentent une structure de réseau cubique.

8. Procédé selon l'une des revendications précédentes,
**caractérisé en ce que**
de la poudre de bore et / ou des composés de bore et / ou des éléments formant du nitrile et / ou leurs composés sont ajoutés au mélange de réaction, se composant de composés C-N-H non ou peu condensés et de métaux de transition et / ou de composés de métaux de transition avant et / ou après un ou plusieurs traitements thermiques, conformément au premier traitement principal dans la deuxième plage de températures.

9. Procédé selon l'une des revendications précédentes,
**caractérisé en ce**
**qu'**il se produit au moins un autre traitement thermique dans une troisième plage de températures entre 520° C et 700° C, après le traitement thermique conformément au premier traitement principal dans la deuxième plage de températures entre 300° C et 570° C.

10. Procédé selon la revendication 9,
**caractérisé en ce que**
l'autre traitement thermique est exécuté après une adjonction de poudre de bore et / ou de composés de bore et / ou d'éléments formant du nitrile et / ou de leurs composés.

11. Procédé selon la revendication 9 ou 10,
**caractérisé en ce que**
l'autre traitement thermique se produit en une ou plusieurs étapes ou de manière oscillante dans la troisième plage de températures et / ou au-delà de la deuxième et de la troisième plage de températures.

12. Composé de métaux de transition de la composition générale MeₐC_{b}N_{c}H_{d}, avec Me = métal de transition ou mélange de métaux de transition, a = 1 -4, b = 6 - 9, c = 8 - 14, d = 0 - 8,
**caractérisé en ce que**
le composé de métaux de transition présente au moins une unité C₆N₉H₄, liée directement ou indirectement au métal de transition ou au mélange de métaux de transition, unité qui existe en tant que di-imino-tri-s-triazine.

13. Composé de métaux de transition selon la revendication 12,
**caractérisé en ce que**
le composé de métaux de transition présente une structure de carbure métallique.

14. Utilisation de composés de métaux de transition, fabriqués selon l'une des revendications 1 à 8, destinés à la fabrication de substances, contenant du carbone et / ou de l'azote, présentes dans le réseau cristallin cubique.
